# EUROPÄISCHE PATENTANMELDUNG

(11) **EP 0 561 217 A2**
(43) Veröffentlichungstag der Anmeldung: **22.09.1993**
(21) Anmeldenummer: 93103372.4
(22) Anmeldetag: 03.03.1993
(51) Int. Cl.: B03D 3/00, B03B 9/06

(54) **Verfahren und Vorrichtung zur Verwertung von Frischbetonresten und dgl. Verbundbaustoffen**

(30) Priorität: 18.03.1992 DE 4208555
(71) Anmelder: WBR WALKE BETON RECYCLING GmbH, 49196 Bad Laer (DE)
(72) Erfinder: Walke, Harald, D-4518 Bad Laer (DE); Walke, Christian, D-4518 Bad Laer (DE)
(74) Vertreter: Busse & Busse Patentanwälte

(57) **Zusammenfassung**

Bei einem Verfahren zur Verwertung von Frischbetonresten und dgl. Verbundbaustoffen wird der aus Betonmischern, Betonfahrmischern und dgl. Baumaschinen entfernte, insbesondere als ein Frischbeton-Spülwasser-Gemisch anfallendeFrischbetonrest in einer einen behälterförmigen Behandlungsaufbau aufweisenden Vorrichtung einem Entsorgungsschritt unterzogen. Das Frischbeton-Spülwasser-Gemisch wird in dem Behandlungsaufbau gesammelt, in diesem einer zumindest periodischen, eine Abbindung der Gemischbestandteile verhindernden Mischbewegung ausgesetzt, das Gemisch nach einer vorbestimmten Verweildauer in eine die Gemischbestandteile durch ein Sedimentationsgleichgewicht trennende Ruhestellung verbracht, ein nach einer Absetzzeit geklärter Spülwasseranteil aus dem Behandlungsaufbau abgeleitet und danach ein verbleibendes Frischbeton-Restgemisch einer Weiterverarbeitung zugeführt.

## Beschreibung

Die Erfindung bezieht sich auf ein Verfahren zur Verwertung von Frischbetonresten gemäß dem Oberbegriff des Anspruchs 1 sowie auf eine Vorrichtung zur Ausführung des Verfahrens gemäß dem Oberbegriff des Anspruchs 8.

Bei bekannten Verfahren und Vorrichtungen zur Entsorgung von Frischbetonresten und dgl. Verbundbaustoffen, wie sie insbesondere aus Betonmischern, Betonfahrmischern und dgl. Baumaschinen in Form eines Frischbeton-Spülwasser-Gemisches anfallen, wird das Gemisch einem als eine rotierende Trommelmischanlage ausgebildeten Behandlungsaufbau zugegeben, an dessen Ausgang die Einzelbestandteile in Form von Kies, Wasser und Zementschlamm abführbar sind und danach dem Mischvorgang bei der Betonherstellung wieder zugegeben werden können. Derartige Trennanlagen sind bei einem insgesamt hohen Bauaufwand sowohl mit nachteilig hohen Gestehungs- und Betriebskosten als auch mit zusätzlichen Transport-und Arbeitszeitaufwendungen verbunden.

Der Erfindung liegt die Aufgabe zugrunde, ein Verfahren und eine Vorrichtung zur Verwertung von Frischbetonresten und dgl. Verbundbaustoffen zu schaffen, womit bei geringem konstruktiven Aufwand und schneller Verfügbarkeit der Vorrichtung eine vollständige Entsorgung des Frischbeton-Spülwasser-Gemisches erreichbar ist.

Die Erfindung löst diese Aufgabe durch ein Verfahren mit den kennzeichnenden Merkmalen des Anspruchs 1 sowie eine Vorrichtung mit den kennzeichnenden Merkmalen des Anspruchs 8. Hinsichtlich wesentlicher weiterer Ausgestaltungen wird auf die Ansprüche 2 bis 7 bzw. 9 bis 14 verwiesen.

Die Erfindung schafft auf besonders einfache und kostengünstige Weise erstmals die Möglichkeit, einen Frischbetonrest als ein beliebiges Frischbeton-Spülwasser-Gemisch mit unterschiedlichster Konsistenz, die z.B. nach einem Spülvorgang von bereits entleerten Betonmischern, Betonfahrmischern und dgl. Baugeräten am Ende einer Dienstschicht entsteht, mit geringem Transportaufwand in den Behandlungsaufbau einzubringen und danach für eine vorbestimmte Überbrückungsdauer unter periodischer Einleitung einer Mischbewegung derart zwischenzulagern, daß mit geringem Energieaufwand ein Abbinden der Gemischbestandteile vermieden und danach eine verlustlose Weiterverarbeitung des Frischbeton-Restgemisches möglich ist.

Mit einer entsprechenden Steuerung wird der Behandlungsaufbau nur periodisch in Bewegung versetzt, wobei vorteilhaft eine mit geringstem Energieverbrauch einhergehende Kipp- oder Pendelbewegung des Behandlungsaufbaus ausgenutzt werden kann.

Der Behandlungsaufbau ist dabei insgesamt von einer Vorrichtung gebildet, die für eine Be- und Entladung ohne Zusatzaggregate ausgebildet werden kann, so daß der damit verbundene geringe Raumbedarf der Vorrichtung einen flexiblen Einsatz ermöglicht. Der mit baulich einfachen Mitteln geschaffene konstruktive Aufbau der Vorrichtung ist auf eine Reduzierung der verschleißbelasteten Bauteile ausgerichtet, so daß auch unter rauhen Betriebsbedingungen die Betriebs- und Reparaturkosten wesentlich gesenkt werden können.

Die Einzelheiten der Erfindung sind in der nachfolgenden Beschreibung in Verbindung mit den Zeichnungen, die ein Ausführungsbeispiel einer Vorrichtung erfindungsgemäßer Ausbildung schematisch veranschaulichen, näher erläutert. In der Zeichnung zeigen:
Fig. 1 eine Seitenansicht der erfindungsgemäßen Vorrichtung in einer ersten, eine Befüll- und/oder Entleerungsstellung bildenden Kippendstellung einer Schwenk-Misch-Einheit,
Fig. 2 eine Seitenansicht der Vorrichtung gemäß Fig. 1 in einer zweiten Kippendstellung,
Fig. 3 eine teilweise geschnittene vergrößerte Einzeldarstellung der Schwenk-Misch-Einheit im Bereich deren Sammelbehälterteils,
Fig. 4 eine Draufsicht auf den Sammelbehälterteil gemäß Fig. 3,
Fig. 5 eine teilweise geschnittene, vergrößerte Einzeldarstellung der Schwenk-Misch-Einheit im Bereich eines Übergabebehälterteils in einer Befüllstellung,
Fig. 6 eine Einzeldarstellung des Übergabebehälterteils gemäß Fig. 5 in einer Entleerungsstellung,
Fig. 7 eine vergrößerte Schnittdarstellung von Trenngliedern im Bereich zwischen Mischbehälterteil und Übergabebehälterteil gemäß einer Linie V-V in Fig. 5,
Fig. 8 eine Schnittdarstellung durch eines der Trennglieder gemäß einer Linie VII-VII in Fig. 6, und
Fig. 9 eine Draufsicht auf die innerhalb eines Schutzzaunes angeordnete Schwenk-Misch-Einheit in der Kippstellung gemäß Fig. 1.

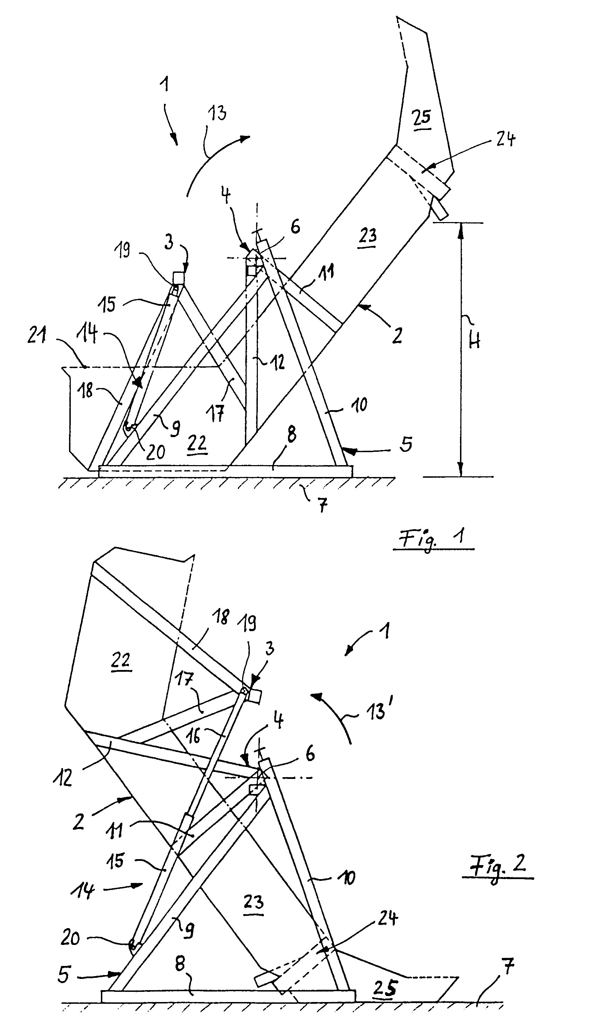

Die in der Zeichnung gemäß Fig. 1 und Fig. 2 in verschiedenen Kippstellungen veranschaulichte, insgesamt einen Behandlungsaufbau 1 bildende Vorrichtung zur Verwertung von Frischbetonresten und dgl. Verbundbaustoffen, besteht aus einer Schwenk-Misch-Einheit 2, die über mehrere Halteglieder 3,4 an einem Gestellrahmen 5 um eine Horizontalachse 6 schwenkbeweglich festgelegt ist.

Der im Bodenbereich 7 abgestützte Gestellrahmen 5 ist in zweckmäßiger Ausführungsform mit einer Bodenstrebe 10 und von dieser ausgehend den Gestellrahmen 5 in Form eines Dreiecks komplettierenden, im oberen Spitzenbereich die Horizontalachse 6 ausbildenden Stützstreben 9,10 versehen, wobei im Bereich der Horizontalachse 6 die die Schwenk-Misch-Einheit 2 unmittelbar tragenden Halteglieder 4 in Form von zwei Haltestreben 11,12 ausgebildet sind.

Zur Einleitung eines die Schwenkbewegung der Schwenk-Misch-Einheit 2 um die Horizontalachse 6 ermöglichenden Drehmomentes in einer Pfeilrichtung 13 ist als ein Antriebsglied 14 ein Hydraulikzylinder 15 vorgesehen, dessen Zylinderstange 16 an dem zwei Führungsstreben 17,18 aufweisenden Halteglied 3 schwenkbeweglich im Bereich eines Schwenklagers 19 in deren Verbindungsbereich abgestützt ist. Der Hydraulikzylinder 15 ist dabei an der Stützstrebe 9 im Bereich eines Stützlagers 20 gehalten.

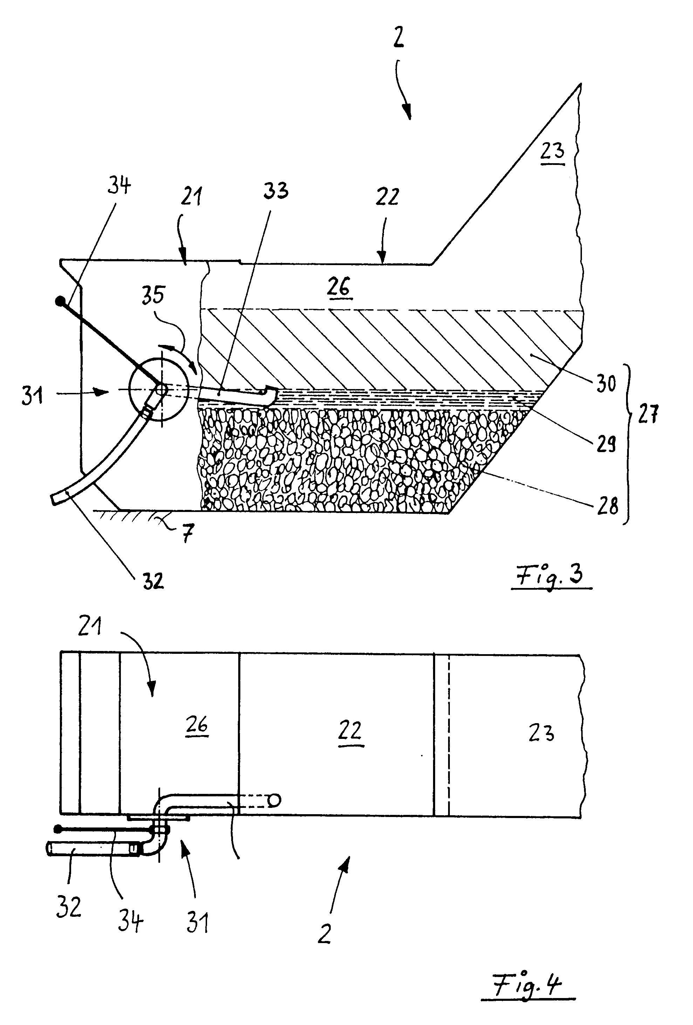

In der in Fig. 1 dargestellten Kippstellung kann in den Behandlungsaufbau 1 über eine Füllöffnung 21 ein zur Verwertung vorgesehener Frischbetonrest (nicht dargestellt),der beispielsweise aus einem Betonmischer, einem Betonfahrmischer oder einer ähnlichen Baumaschine abgeschüttet oder über eine Pumpe gefördert wird, in die Schwenk-Misch-Einheit 2 eingebracht werden. Dazu ist die Schwenk-Misch-Einheit 2 mit einem Sammelbehälterteil 22 ausgebildet, in dem das Frischbeton-Spülwasser-Gemisch in hinreichenden Mengen gesammelt werden kann. Danach wird die Schwenk-Misch-Einheit einer periodischen, eine Abbindung der Gemischbestandteile 27 (Fig. 3) verhindernden Mischbewegung ausgesetzt, wobei die Bewegungseinleitung über die aus dem Hydraulikzylinder 15 ausfahrende Zylinderstange 16 erfolgt und der Behandlungsaufbau aus der Kippstellung gemäß Fig. 1 in die Kippstellung gemäß Fig. 2 bewegt wird.

Das Frischbeton-Spülwasser-Gemisch wird dabei aus dem Sammelbehälterteil 22 in einen Mischbehälterteil 23 bewegt, der im Bereich eines endseitigen Trenngliedes 24 mit einem Übergabebehälterteil 25 verbunden ist. Dieses Trennglied 24 ist in der dargestellten Kippstellung gemäß Fig. 2 flüssigkeitsdicht verschlossen, so daß das Frischbeton-Spülwasser-Gemisch im Mischbehälterteil 23 solange verbleibt, bis durch eine Bewegung des Behandlungsaufbaus 1 in der Pfeilrichtung 13' eine Wiederholung der Mischbewegung erfolgt und das Gemisch unter wiederholter Vermischung in den Sammelbehälterteil 22 gelangt.

Die periodische Bewegung des Frischbeton-Spülwasser-Gemisches durch die vorbeschriebene Kipp oder Pendelbewegung des Behandlungsaufbaus 1 kann über eine automatische Steuereinrichtung (nicht dargestellt) so geregelt werden, daß die periodische Bewegung in einem entsprechenden Zeitintervall, beispielsweise ein- oder zweimal pro Stunde durchgeführt wird. Damit kann mit hinreichender Sicherheit eine Abbindung der Gemischbestandteile verhindert und das Gemisch über eine vorbestimmte Verweildauer, z.B. über die Zeitdauer einer oder mehreren Schichtpausen eines Frischbeton herstellenden Betonmischwerkes, wiederverwertbar aufbewahrt wird.

Das in dem Behandlungsaufbau 1 befindliche Frischbeton-Spülwasser-Gemisch kann dabei aus zeitversetzt eingebrachten und in der Konsistenz unterschiedlichen Teilmengen gebildet sein, die jeweils in der Kippstellung gemäß Fig. 1 über die Füllöffnung 21 in den Sammelbehälterteil 22 zugegeben werden.

Nach Ablauf der vorbestimmten Verweildauer wird das Frischbeton-Spülwasser-Gemisch in eine der Kippstellung in Fig. 1 entsprechende Ruhestellung verbracht, so daß die Gemischbestandteile 27 durch ein sich einstellendes Sedimentationsgleichgewicht in Einzelbestandteile getrennt werden.

In Fig. 3 ist ein Innenraum 26 des Sammelbehälterteils 22 dargestellt, in dem sich die insgesamt mit 27 bezeichneten Gemischbestandteile in Form eines einen Bodensatz bildenden Frischbeton-Restgemischanteil 28, eines Feinstschwemmteils 29 und eines Spülwasseranteils 30 befinden. Diese in horizontalen Ebenen getrennten Gemischbestandteile 27 bilden sich nach einer vorbestimmbaren Absetzzeit, während der die Schwenk-Misch-Einheit 2 in der Ruhestellung verbleibt.

Der geklärte Spülwasseranteil 30 kann nunmehr mit geringem Aufwand aus dem Sammelbehälterteil 22 abgeleitet werden. Dazu wird ein auf den Füllstand im Sammelbehälterinnenraum 26 einstellbarer Auslaß 31 so positioniert, daß das Spülwasser 30 über einen Ablaßschlauch 32 austreten kann. In zweckmäßiger Ausführungsform weist der Auslaß 31 dazu ein inneres Saugrohr 33 auf, das über einen Stellhebel 34 in Pfeilrichtung 35 derart verschwenkt werden kann, daß ein vollständiger Abfluß des Spülwassers 30 erreicht ist. Über eine einfache Sichtkontrolle am zumindest bereichsweise durchsichtigen Ablaßschlauch 32 kann der Ablaßvorgang neu einreguliert werden, sobald das Sammelrohr 33 in den Bereich der Feinstschwemmteile 29 eintaucht.

Im Bereich des Auslasses 31 kann zur Beschleunigung des Absaugvorganges eine Pumpe (nicht dargestellt) vorgesehen sein, so daß auch größere Mengen des Spülwassers 30 in kurzer Zeit aus der Schwenk-Misch-Einheit 2 entfernbar sind. Über die Steuerung des Behandlungsaufbaus 1 kann die Kipp- oder Pendelbewegung jederzeit beliebig unterbrochen werden, so daß beispielsweise auch während der Verweildauer unmittelbar vor der Wiederholung der Mischbewegung des Behandlungsaufbaus 1 der zumindest teilweise geklärte Spülwasseranteil 30 abgeleitet und ein zusätzlicher, die Auslastung des Sammelbehälterteils 22 verbessernder Gemischanteil zugeführt werden kann.

Der Anteil des im Frischbeton-Spülwasser-Gemisch enthaltenen Spülwassers 30 kann bei der Durchführung des Verfahrens vorzugsweise etwa 10 bis 50 % betragen, wobei jedoch auch höhere Spülwasseranteile möglich sind.

Für die Durchführung des Verfahrens unter rauhen Betriebsbedingungen, z.B. bei niedrigen Außentemperaturen, kann der Behandlungsaufbau mit einer Elektroheizung oder einer sonstigen Heizung (nicht dargestellt) versehen sein, die beispielsweise im Bereich unterhalb des Sammelbehälterteils 22 angeordnet ist und eine die Mischbarkeit ermöglichende Temperatur von über 0 _{°} C innerhalb des Frischbeton-Spülwasser-Gemisches gewährleistet.

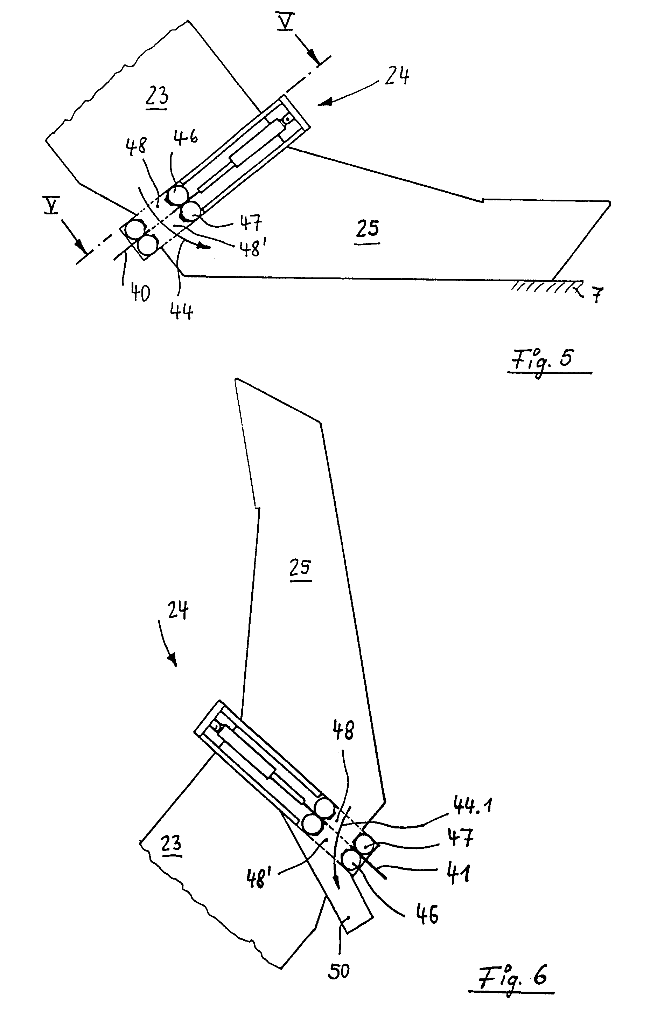

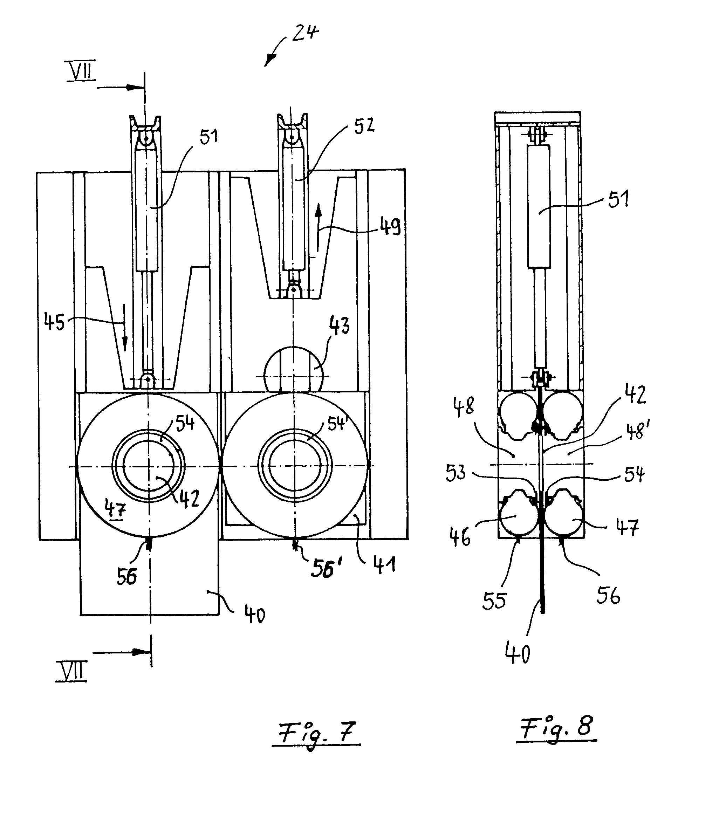

In Fig. 5 und Fig. 6 ist der Übergabebehälterteil 25 mit dem Trennglied 24 in der bodennahen Kippstellung (Fig. 5) sowie in einer oberen Kippstellung (Fig. 6) dargestellt, wobei gemäß der Seitenansicht in Fig. 7 deutlich wird, daß als Trennglied 24 zwischen dem Mischbehälterteil 23 und dem Übergabebehälterteil 25 zwei hydraulisch betätigte Trennschieberplatten 40,41 mit entsprechenden Durchgangsöffnungen 42,43 vorgesehen sind.

In der in Fig. 5 dargestellten Position der Schwenk-Misch-Einheit 2 kann das im Mischbehälterteil 23 befindlicher Frischbeton-Restgemisch (Fig. 3) in einer Füllrichtung 44 in den Übergabebehälterteil 25 eingeleitet werden, wozu die Trennschieberplatte 40 in einer Bewegungsrichtung 45 (Fig. 7) derart bewegt wird, daß mit der Durchgangsöffnung 42 ein zwischen zwei Führungskörpern 46,47 befindlicher Auslaßbereich 48,48' freigegeben wird. Nach dem Füllen des Übergabehälterteils 25 wird der Auslaßbereich 48,48' durch die Bewegung der entsprechenden Trennschieberplatte 40 in einer Schließrichtung 49 (in Fig. 7 in analoger Ausführung für die Trennschieberplatte 41 angegeben) flüssigkeitsdicht verschlossen und danach in die Kippstellung gemäß Fig. 6 verbracht.

In der damit erreichten Position befindet sich der Übergabebehälterteil 25 in einem Bodenabstand H (Fig. 1), der insbesondere so bemessen sein kann, daß in dieser Position ein Betonfahrmischer die Schwenk-Misch-Einheit 2 zumindest im Bereich eines Auslaßrohres 50 unterfahren kann. Dieses Auslaßrohr 50 ist dabei der Trennschieberplatten 41 derart zugeordnet, daß beim Öffnen der Trennschieberplatte 41 (Fig. 6) das im Übergabebehälterteil 25 befindliche Frischbeton-Restgemisch 28 mit geringem Aufwand in einer Füllrichtung 44.1 abgeleitet werden kann, wobei insbesondere die damit in einen befüllten Betonfahrmischer geleitete Menge des Frischbeton-Restgemisches 28,29 auf das Volumen und die Zusammensetzung des im Betonfahrmischer enthaltenen Frischbetons abgestimmt ist.

Der vorbeschriebene Übergabevorgang zum Austrag des Frischbeton-Restgemisches 28,29 aus der Schwenk-Misch-Einheit 2 kann in umgekehrter Reihenfolge, ausgehend von der Positionierung des Übergabebehälterteils in der Stellung gemäß Fig. 5, ebenfalls für eine Befüllung des Behandlungsaufbaus 1 am Ende einer Dienstschicht genutzt werden.

Zur Betätigung der Trennschieberplatten 40,41 sind im Bereich des Trenngliedes 24 gemäß Fig. 7 und Fig. 8 in zweckmäßiger Ausführungsform Hydraulikzylinder 51,52 vorgesehen, die die jeweilige Bewegung in Pfeilrichtung 45 bzw. 49 ermöglichen. Dabei ist in Anpassung an das in den Auslaßbereichen 48,48' jeweils anliegende Frischbeton-Restgemisch 28,29 mit grobkörnigen Kies-, Sand- und Feinstanteilen die Schließrichtung 49 so gewählt, daß im Bereich jeweiligen Abstreifringe 53,54 entsprechend feinkörniges Material von den Trennschieberplatten 40,41 entfernt und die grobkornigeren Materialbestandteile unter Wirkung der Schwerkraft selbsttätig ferngehalten wird. Damit ist eine hohe Langzeitdichtigkeit erreicht und die Störanfälligkeit im Bereich des Trenngliedes 24 nahezu vollständig ausgeschlossen.

Die Führungskörper 46,47 sind in zweckmäßiger Ausführungsform jeweils als ein elastischer, mit unterschiedlichem Innendruck beaufschlagbarer Gummiringkörper vorgesehen, der über entsprechende Ventile 55,56 (Fig. 7, Fig. 8) beliebig nachgefüllt werden kann und damit eine hinreichende Flüssigkeitsdichtigkeit gewährleistet.

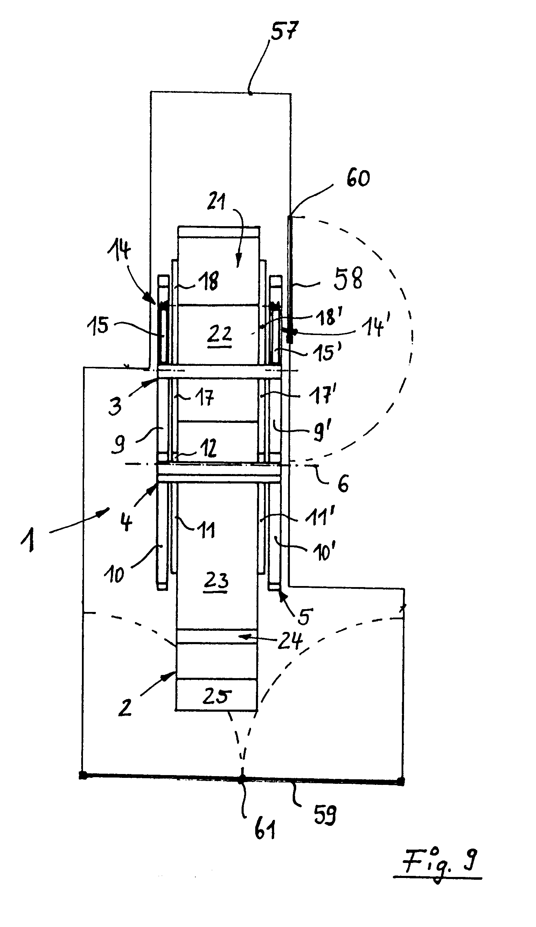

In Fig. 9 veranschaulicht eine Draufsicht auf einen Behandlungsaufbau 1 die für einen Betrieb der Schwenk-Misch-Einheit 2 notwendigen Sicherheitsbedingungen, wozu ein den Behandlungsaufbau 1 umgebender Sicherheitszaun 57 vorgesehen sein kann, dessen Zugangstore 58,59 im Bereich ihrer Schlösser 60,61 eine mit der Maschinensteuerung gekoppelte Sicherheitseinrichtung aufweisen, so daß die Bewegung der Schwenk-Misch-Einheit 2 in die unterschiedlichen Kippstellungen gemäß Fig. 1 und Fig. 2 nur dann erfolgt, wenn eine bei geschlossenen Toren 58,59 signalisierte Freigabe erfolgt.

Der Gegenstand der Erfindung ist nicht auf die in den Zeichnungen dargestellten und das vorstehend beschriebene Ausführungsbeispiel beschränkt. Vielmehr sind im Rahmen der Ansprüche auch anderweitige Ausgestaltungen und Modifikationen denkbar. So kann z.B. der Aufbau der Schwenk-Misch-Einheit 2 unterschiedliche Gestalt aufweisen und die Größenverhältnisse von Sammelbehälterteil 22 sowie Übergabebehälterteil 25 können an verschiedene Aufnahmevolumen des Behandlungsaufbaus 1 insgesamt mit geringem konstruktiven Aufwand angepaßt werden. Das Verfahren und/oder die Vorrichtung gemäß der Erfindung können auch Anwendung finden auf der Behandlung bzw. Verwertung von aus Wasser und Erde und/oder sonstigen Bestandteilen bestehenden Schlammgemischen.

## Patentansprüche

1. Verfahren zur Verwertung von Frischbetonresten und dgl. Verbundbaustoffen, wobei der aus Betonmischern, Betonfahrmischern und dgl. Baumaschinen entfernte, insbesondere als ein Frischbeton-Spülwasser-Gemisch anfallende Frischbetonrest in einem behälterförmigen Behandlungsaufbau (1) einem Entsorgungsschritt unterzogen wird, dadurch gekennzeichnet, daß das Frischbeton-Spülwasser-Gemisch in dem Behandlungsaufbau (1) gesammelt, in diesem einer zumindest periodischen, eine Abbindung der Gemischbestandteile (27) verhindernden Mischbewegung ausgesetzt, das Gemisch nach einer vorbestimmten Verweildauer in eine die Gemischbestandteile (27) durch ein Sedimentationsgleichgewicht trennende Ruhestellung verbracht, ein nach einer Absetzzeit geklärter Spülwasseranteil (30) aus dem Behandlungsaufbau (1) abgeleitet und danach ein verbleibendes Frischbeton-Restgemisch (28,29) einer Weiterverarbeitung zugeführt wird.

2. Verfahren nach Anspruch 1, dadurch gekennzeichnet, daß die periodische Bewegung des Frischbeton-Spülwasser-Gemisches durch eine Kipp- oder Pendelbewegung des Behandlungsaufbaus (1) erzeugt wird.

3. Verfahren nach Anspruch 1 oder 2, dadurch gekennzeichnet, daß die periodische Bewegung mindestens einmal pro zwei Stunden durchgeführt wird.

4. Verfahren nach einem der Ansprüche 1 bis 3, dadurch gekennzeichnet, daß während der Verweildauer unmittelbar vor der Wiederholung der Mischbewegung des Behandlungsaufbaus (1) der geklärte Spülwasseranteil (30) abgeleitet und zusätzliche Gemischanteile zugeführt werden.

5. Verfahren nach einem der Ansprüche 1 bis 4, dadurch gekennzeichnet, daß das in dem Behandlungsaufbau (1) befindliche Frischbeton-Spülwasser-Gemisch aus zeitversetzt eingebrachten und in der Konsistenz unterschiedlichen Teilmengen gebildet wird.

6. Verfahren nach einem der Ansprüche 1 bis 5, dadurch gekennzeichnet, daß der Anteil des im Frischbeton-Spülwasser-Gemisch enthaltenen Spülwassers etwa 10 bis 50 % beträgt.

7. Verfahren nach einem der Ansprüche 1 bis 6, dadurch gekennzeichnet, daß das Frischbeton-Spülwasser-Gemisch auf einer die Mischbarkeit ermöglichenden Temperatur von über 0 _{°} C gehalten wird.

8. Vorrichtung zur Verwertung von Frischbetonresten und dgl. Verbundbaustoffen, wobei für den aus Betonmischern, Betonfahrmischern und dgl. Baumaschinen entfernten, insbesondere als ein Frischbeton-Spülwasser-Gemisch anfallenden-Frischbetonrest ein diesen aufnehmender behälterförmiger Behandlungsaufbau (1) mit einem Antriebsteil (14) vorgesehen ist, dadurch gekennzeichnet, daß der Behandlungsaufbau (1) als eine einen Sammelbehälterteil (22), einen Mischbehälterteil (23) und einen Übergabebehälterteil (25) aufweisende Schwenk-Misch-Einheit (2) ausgebildet ist, die mit dem Antriebsteil (14) schwenkbeweglich in einem sowohl eine Befüllungs- und Entleerungsstellung als auch eine Mischbewegung des Frischbeton-Spülwasser-Gemisches ermöglichenden Abstützungseingriff an einem Gestellrahmen (5) über mehrere Halteglieder (3,4) festlegbar ist.

9. Vorrichtung nach Anspruch 8, dadurch gekennzeichnet, daß der Sammelbehälterteil (22) und der Mischbehälterteil (23) einstückig ineinander übergehen und der Mischbehälterteil (23) über ein Trennglied (24) mit dem Übergabebehälterteil (25) verbunden ist.

10. Vorrichtung nach Anspruch 8 oder 9, dadurch gekennzeichnet, daß die Schwenk-Misch-Einheit (2) über Haltestreben (11,12) unmittelbar am Gestellrahmen (5) und über zwischen sich und dem Gestellrahmen (5) jeweils einen Hydraulikzylinder (15,15') als Antriebsglied (14) aufweisenden Führungsstreben (17,18) abgestützt ist.

11. Vorrichtung nach einem der Ansprüche 8 bis 10, dadurch gekennzeichnet, daß zumindest im Bereich des Sammelbehälterteils (22) ein auf den Füllstand im Sammelbehälterinnenraum (26) einstellbarer Auslaß (31) vorgesehen ist.

12. Vorrichtung nach einem der Ansprüche 8 bis 11, dadurch gekennzeichnet, daß als Trennglied (24) zwischen dem Mischbehälterteil (23) und dem Übergabebehälterteil (25) zumindest eine hydraulisch betätigte Trennschieberplatte (40,41) mit einer Durchgangsöffnung (42,43) vorgesehen ist.

13. Vorrichtung nach Anspruch 12, dadurch gekennzeichnet, daß als Trennglied (24) zwei Trennschieberplatten (40,41) vorgesehen sind, wovon eine mit einem Auslaßrohr (50) verbunden ist.

14. Vorrichtung nach Anspruch 12 oder 13, dadurch gekennzeichnet, daß die jeweilige Trennschieberplatte (40,41) beidseits zwischen jeweils einen mittleren Auslaßbereich (48,48') aufweisenden Führungskörpern (46,47) mit Abstreifringen (53,54) gehalten ist.

15. Vorrichtung nach einem der Ansprüche 12 oder 14, dadurch gekennzeichnet, daß als Führungskörper (46,47) jeweils ein elastischer, über Ventile (55,56) mit unterschiedlichem Innendruck beaufschlagbarer Gummiringkörper vorgesehen ist.
